(19) Europäisches Patentamt

European Patent Office

Office européen des brevets

(11) **EP 0 788 219 B1**

(12) **FASCICULE DE BREVET EUROPEEN**

(45) Date de publication et mention
de la délivrance du brevet:
**06.06.2001 Bulletin 2001/23**

(51) Int Cl.7: **H02M 7/538**

(21) Numéro de dépôt: **97400199.2**

(22) Date de dépôt: **28.01.1997**

(54) **Dispositif de commande d'un circuit ZVS**

Steuervorrichtung für eine ZVS-Schaltung

Control device for a ZVS circuit

(84) Etats contractants désignés:
**BE DE ES FR GB IT NL**

(30) Priorité: **30.01.1996 FR 9601059**

(43) Date de publication de la demande:
**06.08.1997 Bulletin 1997/32**

(73) Titulaire: **Brandt Cooking**
**45140 Saint Jean de la Ruelle (FR)**

(72) Inventeur: **Cornec, René, c/o Thomson-CSF, SCPI**
**94117 Arcueil Cedex (FR)**

(74) Mandataire: **Rinuy, Santarelli**
**14, avenue de la Grande Armée**
**75017 Paris (FR)**

(56) Documents cités:
**EP-A- 0 320 410         FR-A- 2 644 948**
**US-A- 4 342 076**

**Description**

La présente invention a pour objet un dispositif de commande d'un circuit comportant un onduleur à résonance destiné à alimenter au moins une charge comportant une composante inductive.

De tels circuits sont également connus sous le nom de structures ZVS (ZVS étant les initiales anglo-saxonnes mises pour "Zero Voltage Switch").

Ils peuvent être utilisés notamment dans les plaques de cuisson à induction, la charge étant alors constituée par l'association d'un inducteur et d'un ustensile de cuisson posé au-dessus de l'inducteur.

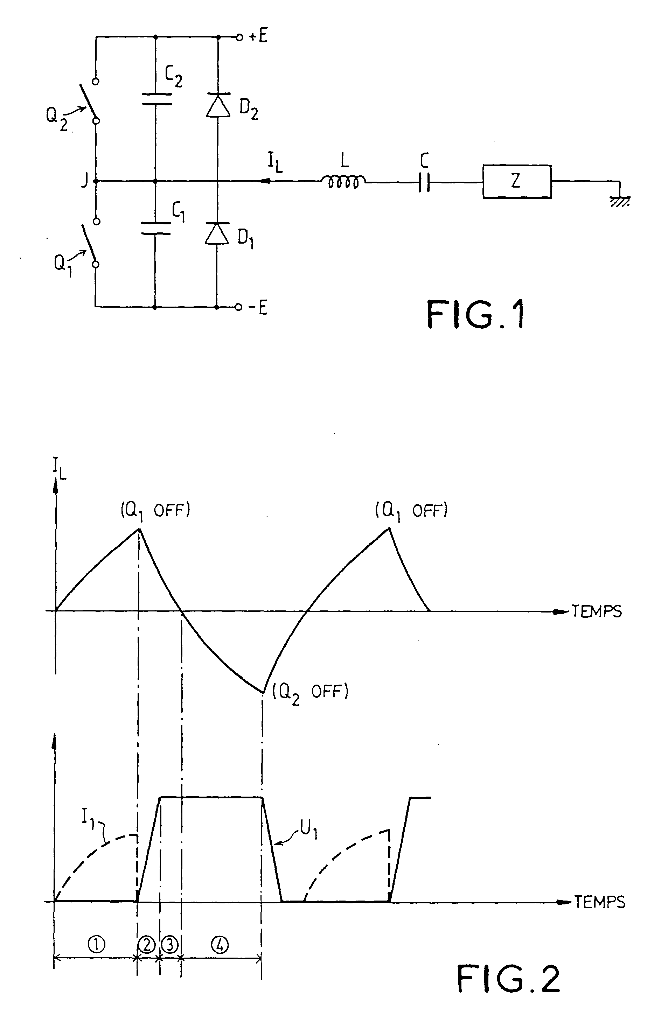

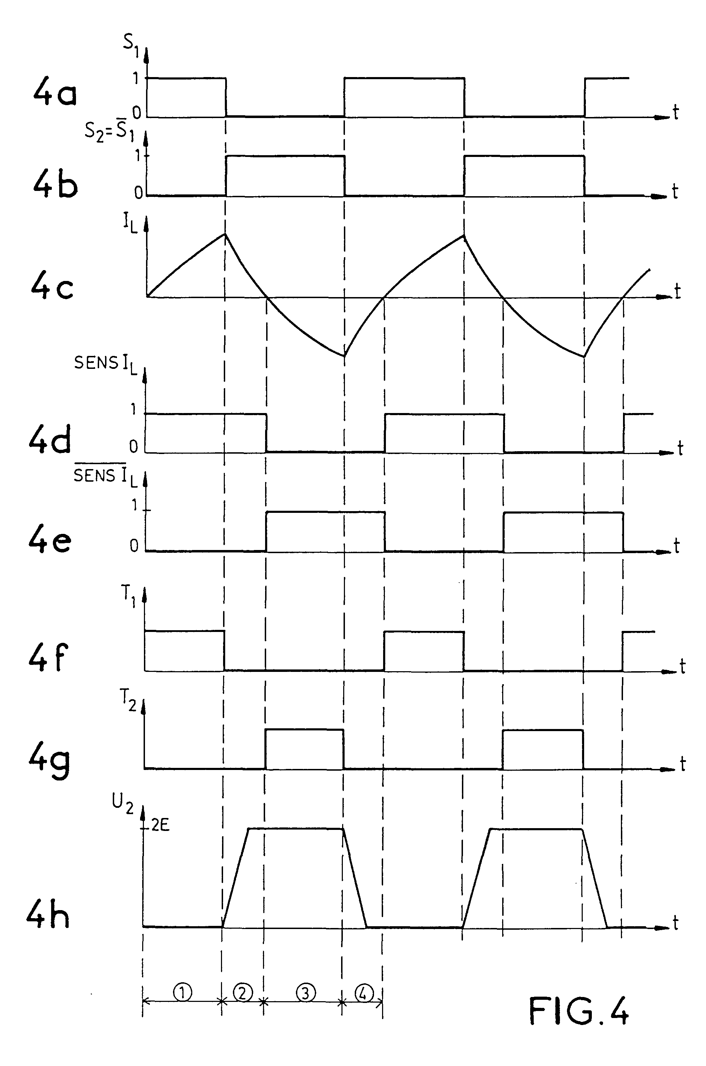

Toute structure ZVS peut se ramener au schéma électrique de la figure 1 :

Plus précisément, le circuit qui nous intéresse dans le cadre de la présente invention est un onduleur du type comportant au moins deux interrupteurs $Q_1$, $Q_2$ de type transistors (bipolaire, Mosfet ou IGBT) montés en série aux bornes d'une alimentation en tension continue -E, +E. Les transistors de commutation $Q_1$ et $Q_2$ sont commandés à une fréquence prédéterminée de manière à être alternativement conducteurs. Ils transmettent l'énergie de la tension d'alimentation vers une charge Z via une inductance de résonance L et un condensateur de résonance C connectés en série au point de jonction J des deux interrupteurs. Pour permettre le fonctionnement d'une telle structure, deux diodes de roue libre $D_1$ et $D_2$ montées chacune en parallèle sur l'un des deux transistors sont nécessaires. Ces diodes prennent en charge provisoirement le courant pendant le temps de repos durant lequel les deux interrupteurs sont ouverts. Comme le montre la figure 1, le point de jonction des deux diodes de roue libre $D_1$ et $D_2$ est commun avec celui des interrupteurs $Q_1$ et $Q_2$. Par ailleurs, pour réduire au mieux les pertes par commutation, on place un condensateur $C_1$, $C_2$ d'aide à la commutation en parallèle sur chaque interrupteur.

La figure 2 illustre un chronogramme de fonctionnement de la structure ZVS en demi-pont de la figure 1 :

Plus précisément, la courbe dans la partie supérieure de la figure 1 représente l'allure du courant $I_L$ dans la charge au cours du temps. Dans la partie inférieure de la figure 2, la courbe $I_1$ en pointillés représente le courant dans l'interrupteur $Q_1$ au cours du temps, et la courbe $U_1$ en trait plein représente la tension aux bornes de l'interrupteur $Q_1$ au cours du temps. On distingue quatre phases de fonctionnement notées de ① à ④ sur l'abscisse temporelle :

    ①L'interrupteur $Q_1$ conduit jusqu'au moment de son ouverture. Pendant cette phase, le courant $I_1$ et le courant $I_L$ augmentent. A la fermeture de l'interrupteur $Q_1$, le courant $I_1$ s'annule.
    ②Le courant $I_L$ décharge les condensateurs $C_1$ et $C_2$ jusqu'à la conduction de la diode de roue libre $D_2$. La tension $U_1$ aux bornes de l'interrupteur $Q_1$

augmente jusqu'à la valeur 2E.
    ③La diode de roue libre $D_2$ conduit.
    ④L'interrupteur $Q_2$ conduit. Le courant $I_L$ est devenu négatif.

Grâce aux condensateurs $C_1$ et $C_2$, la tension aux bornes de $Q_1$ croît beaucoup plus lentement que le courant $I_1$ décroît. Ceci explique pourquoi les pertes de commutation sont plus réduites avec ces deux condensateurs.

Pour que le montage précédent fonctionne correctement, on constate que l'instant de fermeture des interrupteurs $Q_1$ ou $Q_2$ doit être judicieusement choisi. Il faut notamment s'assurer que les condensateurs $C_1$ et $C_2$ ont été correctement chargés ou déchargés avant de fermer un interrupteur.

Deux stratégies de commande sont à l'heure actuelle retenues :

Une première stratégie de commande, dite à Thyristor dual, consiste à ne permettre la fermeture de l'interrupteur que lorsque la tension à ses bornes s'annule. Une telle stratégie est par exemple décrite dans le document FR 2.499.789. L'inconvénient majeur de ce type de stratégie réside dans le fait que, si pour des raisons de variations de charge ou de tension d'entrée ou des problèmes de démarrage, le courant $I_L$ dans la charge n'est pas suffisant pour charger ou pour décharger les condensateurs $C_1$ et $C_2$, alors la tension aux bornes des interrupteurs ne s'annule pas et les interrupteurs ne se ferment pas. En outre, en cas de mauvaise commande, par exemple si l'on décide d'ouvrir un interrupteur trop tôt, le courant n'est pas suffisant pour faire conduire la diode de roue libre et l'autre interrupteur, dont la tension ne s'annule jamais, ne peut pas être fermé.

Une deuxième stratégie de commande, dite par temps mort, consiste à ne permettre la fermeture d'un interrupteur qu'une durée $T_M$ fixe et prédéterminée après avoir ouvert l'autre interrupteur. Si, pour des raisons identiques à celles précitées, le courant IL n'est pas suffisant pour les charges ou décharges des condensateurs d'aide à la commutation, les interrupteurs vont être fermés avec une tension résiduelle aux bornes des condensateurs. Il s'ensuit une surintensité dans les interrupteurs, préjudiciable à leur fonctionnement, et pouvant aller même jusqu'à leur destruction. En outre, une telle stratégie de commande est peu adaptée à l'utilisation de transistors bipolaires comme interrupteurs. En effet, les transistors bipolaires présentent un certain délai de réponse, appelé temps de stockage, qui est difficilement maîtrisable et qui peut être de l'ordre de deux fois la durée $T_M$. On peut certes remédier à cela en imposant que l'instant à partir duquel court la durée $T_M$ n'est plus l'instant d'ouverture d'un transistor, mais l'instant où le courant dans le transistor s'annule, mais il est alors nécessaire de prévoir des circuits particuliers.

Le document EP -A- 0 320 410 décrit un dispositif de commande d'un onduleur à résonance dans lequel la fermeture des interrupteurs est commandée par le passage à zéro du courant dans la charge.

Le document US -A- 4,342,076 décrit un autre dispositif de commande d'un onduleur dans lequel le dispositif commande la fermeture et l'ouverture des interrupteurs par l'intermédiaire d'un transformateur associé à chaque interrupteur.

La présente invention a pour but de proposer un dispositif utilisant une nouvelle stratégie de commande qui ne présente pas les inconvénients précités.

La stratégie de commande utilisée par l'invention permet un fonctionnement de l'onduleur en sorte que :

- La décision d'ouverture d'un interrupteur est immédiatement suivie d'effet.
- La décision de fermeture d'un interrupteur ne prend effet que lorsque le courant dans la charge s'annule et change de sens.

Plus précisément, la présente invention a pour objet un dispositif de commande d'un circuit comportant un onduleur à résonance destiné à alimenter au moins une charge comportant une composante inductive, l'onduleur étant du type comportant au moins :

- une paire de transistors de commutation montés en série entre les bornes d'une alimentation en tension continue, de manière à former deux interrupteurs conduisant alternativement sous l'action du dispositif de commande;
- deux diodes de roue libre montées chacune en parallèle sur l'un des deux transistors;
- deux condensateurs d'aide à la commutation montés chacun en parallèle sur l'un des deux transistors;

le point de jonction commun entre les deux transistors de commutation, les diodes de roue libre et les condensateurs étant reliés en série à une borne de ladite charge; le dispositif comportant :

- des premiers moyens délivrant pour chaque interrupteur, un signal de décision de commutation à deux états représentatifs d'une décision d'ouverture ou de fermeture de l'interrupteur, les deux signaux de décision de commutation étant associés chacun, au moyen d'un interface de puissance, aux deux interrupteurs, les deux signaux de décision de commutation étant en opposition de phase de manière à décider l'ouverture et la fermeture périodiques de chaque interrupteur en alternance;
- des seconds moyens permettant de détecter les changements de sens du courant dans la charge;

le dispositif étant caractérisé en ce qu'il comporte un transformateur de courant comportant :

- un enroulement primaire connecté en série entre la charge et le point de jonction commun entre les interrupteurs, les diodes de roue libre et les condensateurs d'aide à la commutation;
- un premier enroulement secondaire connecté entre l'émetteur d'un des deux interrupteurs et la première borne d'une première alimentation en tension continue, la deuxième borne de l'alimentation étant connectée à la base de l'interrupteur;
- un deuxième enroulement secondaire connecté entre l'émetteur de l'autre interrupteur et la première borne d'une deuxième alimentation en tension continue, la deuxième borne de l'alimentation étant connectée à la base de cette autre interrupteur;
- un troisième et un quatrième enroulements secondaires couplés respectivement aux deuxième et premier enroulements secondaires, chacun des troisième et quatrième enroulements secondaires étant relié entre une masse et un des interfaces de puissance;

les polarisations des différents enroulements étant choisies de manière à ce que l'ouverture d'un interrupteur s'effectue dès que le signal de décision de commutation associé est à un état représentatif de la décision d'ouverture et de manière à ce que la fermeture d'un interrupteur s'effectue lorsque le signal de décision de commutation associé est à un état représentatif de la décision de fermeture et sensiblement lorsque le courant dans la charge a changé de sens.

L'invention, ainsi que les avantages qu'elle procure, seront mieux compris au vu de la description suivante, faite en référence aux figures annexées, dans lesquelles :

- La figure 1, déjà décrite, représente le schéma électrique général d'une structure ZVS en demi-pont ;
- La figure 2, déjà décrite, représente les variations au cours du temps du courant dans la charge, et du courant et de la tension d'un des interrupteurs de la structure selon la figure 1 ;
- La figure 3 illustre un mode de réalisation possible d'un dispositif pour la mise en oeuvre de la stratégie de commande utilisée par l'invention ;
- La figure 4 illustre, sous forme de chronogramme, le fonctionnement de la commande pour le dispositif de la figure 3 ;
- La figure 5 illustre un mode de réalisation possible d'un dispositif de commande selon l'invention ;
- La figure 6 représente le schéma électrique d'une structure ZVS en demi-pont et à diviseur capacitif ;
- La figure 7 représente le schéma électrique d'une structure ZVS en pont complet.

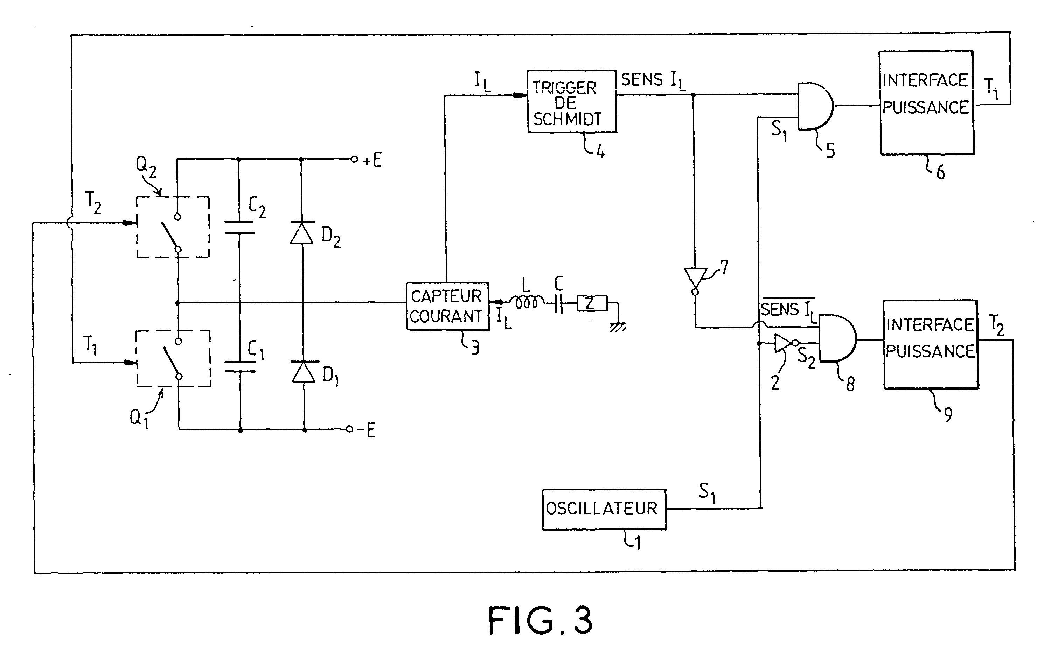

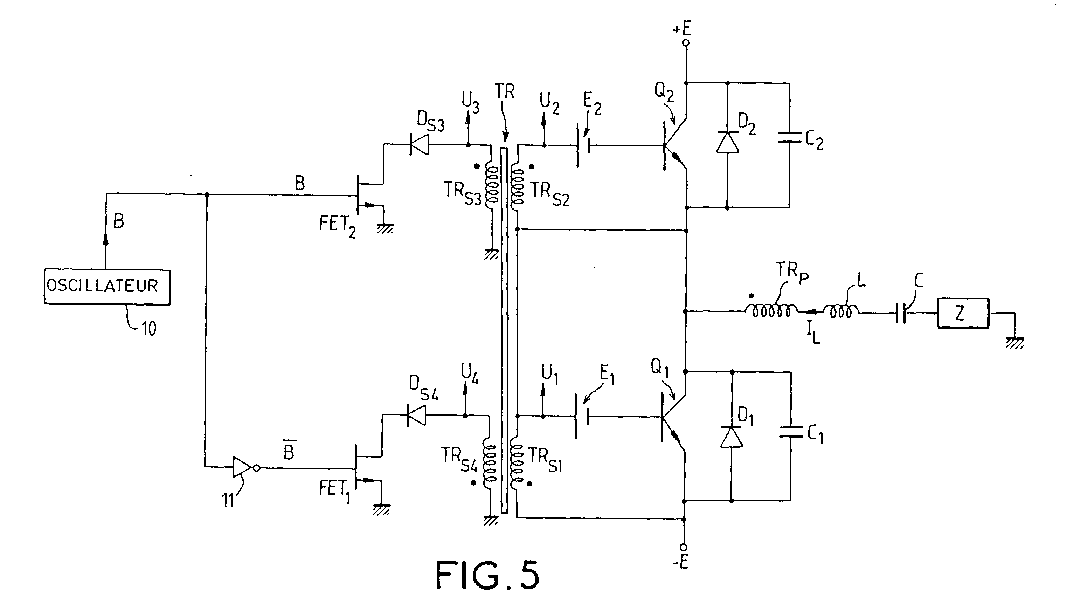

La figure 3 représente un mode de réalisation possible d'un dispositif de commande pour la mise en oeuvre de la stratégie de commande utilisée par l'invention. On retrouve sur la figure 3 la structure ZVS en demi-pont de la figure 1, tous les autres éléments de la figure étant propres au dispositif de commande de cette structure. Pour comprendre le fonctionnement, on se reportera aux différentes courbes de la figure 4, représentant l'allure des signaux au cours du temps en différents points du dispositif de commande et de la structure ZVS. On crée deux signaux $S_1$ et $S_2$ de décision de commutation pour l'ouverture et la fermeture de chacun des interrupteurs $Q_1$, $Q_2$. Les courbes 4a et 4b de la figure 4 illustrent l'allure de ces deux signaux de décision dans le temps. Chaque signal $S_1$ ou $S_2$ présente deux états 1 ou 0 représentatifs d'une décision d'ouverture ou de fermeture de l'interrupteur associé. Dans l'exemple représenté, le signal $S_1$ passe de l'état 1 à l'état 0 lorsque l'on décide d'ouvrir l'interrupteur $Q_1$, et passe de l'état 0 à l'état 1 quand on décide de le fermer. Les signaux $S_1$ et $S_2$ sont périodiques et en opposition de phase ($S_2 = \bar{S}_1$) de manière à décider l'ouverture et la fermeture périodiques et en alternance des deux interrupteurs $Q_1$ et $Q_2$. L'un des deux signaux de décision, par exemple $S_1$, peut être obtenu à partir d'un oscillateur 1 (figure 3) générant un signal rectangulaire, et le signal $S_2$ peut être obtenu au moyen d'un inverseur 2 recevant sur son entrée le signal $S_1$.

Par ailleurs, la courbe 4c de la figure 4 illustre la forme du courant $I_L$ dans la charge. Un capteur de courant 3 en série avec la charge permet de prélever ce courant $I_L$. En comparant ce courant prélevé avec une référence fixe égale ou légèrement supérieure à zéro, on crée un signal logique SENS_$I_L$ à deux états, représentatif du sens du courant $I_L$ dans la charge. La courbe 4d de la figure 4 représente le signal SENS_$I_L$ obtenu lorsque le courant $I_L$ est comparé à la référence zéro. Cependant, le courant $I_L$ peut être délivré à l'entrée d'un trigger de Schmidt 4 qui possède une référence interne légèrement supérieure à zéro de façon à obtenir un signal SENS_$I_L$ en légère avance de phase par rapport au courant $I_L$. La combinaison particulière de ce signal SENS_$I_L$ avec les signaux de décision de commutation $S_1$ et $S_2$ va permettre, de générer deux signaux de commande $T_1$ et $T_2$ des interrupteurs $Q_1$ et $Q_2$.

Plus précisément, un premier signal de commande $T_1$ est généré en réalisant la fonction ET logique du signal de décision $S_1$ et du signal SENS_$I_L$. Une première porte ET 5 à deux entrées et une sortie reliée à une interface de puissance 6 permettent la génération d'un tel signal de commande $T_1$. En outre, un second signal de commande $T_2$ est généré en réalisant la fonction ET logique du signal de décision $S_2$ et d'un signal $\overline{SENS\_I_L}$ complémentaire de SENS_$I_L$, obtenu à l'aide d'un inverseur 7 et dont l'allure est montrée sur la courbe 4e de la figure 4. Une seconde porte ET 8 suivie d'une interface de puissance 9 permettent la génération du signal $T_2$. Les courbes 4f et 4g représentent respectivement les signaux de commande $T_1$ et $T_2$ obtenus.

En comparant par exemple le signal de décision $S_1$ et le signal de commande effective $T_1$ de l'interrupteur $Q_1$, on remarque que la commande d'ouverture (passage de 1 à 0) de l'interrupteur $Q_1$ s'opère dès que la décision d'ouverture est prise. Par contre, lorsque l'on prend la décision de fermer l'interrupteur $Q_1$ (passage de 0 à 1 du signal $T_1$), la commande de fermeture $T_1$ ne s'opère effectivement que lorsque le courant $I_L$ a changé de sens. Un raisonnement analogue peut être conduit sur l'interrupteur $Q_2$.

On retrouve les quatre étapes ①à ④de fonctionnement décrites précédemment, mais les commandes de fermeture des interrupteurs sont assujetties au sens du courant dans la charge.

Le montage précédent présente l'avantage de ne jamais s'arrêter, même en cas de mauvaise commande. En effet, supposons par exemple que le courant $I_L$ soit trop faible. Les interrupteurs seront tout de même fermés dès que l'on détectera un changement de sens dans le courant.

On peut démontrer par ailleurs que la tension aux bornes des interrupteurs est minimale ou nulle au moment de leur fermeture. Le stress sur les composants est donc minimal.

Un tel montage permet en outre de retourner plus vite à un état stable lorsque le montage est soumis à une perturbation externe.

Les temps de charge ou de décharge des condensateurs d'aide à la commutation $C_1$ et $C_2$ peuvent être beaucoup plus variables ici que dans le cas d'une commande à temps mort.

Enfin, l'utilisation de transistors bipolaires pour réaliser les fonctions d'interrupteur est sans incidence sur le fonctionnement de la commande.

Nous avons vu précédemment en référence aux figures 3 et 4, un mode de réalisation d'un dispositif faisant appel à des circuits électroniques actifs (inverseurs, portes ET). Cependant, dans certains cas, il est nécessaire de disposer d'un isolement galvanique qui n'est pas offert par le dispositif précédemment décrit.

Nous allons à présent décrire un mode de réalisation préférentiel du dispositif selon l'invention en référence à la figure 5, dans lequel les fonctions ET s'effectuent de façon naturelle, sans qu'il soit nécessaire de générer le signal SENS_$I_L$, ni les signaux de commande $T_1$ et $T_2$:

Sur la figure 5, on retrouve la structure de base ZVS précédemment décrite, les interrupteurs étant réalisés par deux transistors bipolaires de type NPN.

Le dispositif de commande conforme à l'invention présente un transformateur de courant TR servant à la production des courants de commande de la base des transistors $Q_1$ et $Q_2$. Plus précisément, un enroulement primaire $TR_P$ du transformateur TR est connecté en série entre la charge et le point de jonction commun entre les transistors $Q_1$, $Q_2$, les diodes de roue libre $D_1$, $D_2$ et les condensateurs d'aide à la commutation $C_1$, $C_2$.

Un premier enroulement secondaire $TR_{S1}$ du transformateur TR est connecté entre l'émetteur du transistor $Q_1$ et à la borne positive d'une première alimentation en tension continue $E_1$ dont la borne négative est reliée à la base du transistor $Q_1$.

De façon analogue, un deuxième enroulement secondaire $TR_{S2}$ du transformateur TR est connecté entre l'émetteur du transistor $Q_2$ et une seconde alimentation en tension continue $E_2$ dont la deuxième borne est reliée à la base du transistor $Q_2$.

De l'autre côté du noyau du transformateur TR, un troisième enroulement secondaire $TR_{S3}$ est relié entre la masse du circuit et l'anode d'une diode $D_{S3}$. La cathode de la diode est reliée à la source d'un transistor à effet de champ $FET_2$ qui sert de commutateur électronique.

De façon analogue, un quatrième enroulement secondaire $TR_{S4}$ du transformateur TR est relié à la source d'un transistor à effet de champ $FET_1$ par l'intermédiaire d'une diode $D_{S4}$.

Les enroulements $TR_{S3}$ et $TR_{S4}$ sont couplés respectivement aux enroulements $TR_{S2}$ et $TR_{S1}$.

Les polarisations des différents enroulements sont indiquées par les points placés sur les côtés des enroulements.

On note dans la suite B le signal de décision de commutation de l'interrupteur $Q_2$, délivré par exemple par un oscillateur 10. Ce signal B est délivré d'une part sur la grille du transistor $FET_2$, et d'autre part, après inversion par un inverseur 11, sur la grille du transistor $FET_1$.

On part de l'hypothèse où le courant $I_L$ dans la charge est positif, c'est-à-dire qu'il va de la charge vers l'enroulement primaire $TR_P$, comme indiqué sur la figure 5, et où le signal de décision B est à l'état 1.

On distingue alors quatre phases de fonctionnement :

①L'interrupteur électronique $FET_1$ est ouvert et l'interrupteur électronique $FET_2$ est fermé. Comme le courant $I_L$ est positif, l'enroulement $TR_{S1}$ conduit un courant dans la base de $Q_1$. Par conséquent, le transistor $Q_1$ conduit (interrupteur fermé). Les tensions $U_1$ et $U_4$ respectivement au point de jonction entre l'enroulement $TR_{S1}$ et l'alimentation $E_1$, et au point de jonction entre l'enroulement $TR_{S4}$ et de la diode $D_{S4}$ sont positives. A l'inverse, les tensions $U_2$ et $U_3$ prises respectivement au point de jonction entre l'enroulement $TR_{S2}$ et l'alimentation $E_2$ et le point de jonction entre la diode $D_{S3}$ sont négatives. Par conséquent, cette diode $D_{S3}$ est bloquée.

②Le courant $I_L$ est toujours positif et le signal B passe à 0. L'interrupteur $FET_2$ s'ouvre et l'interrupteur $FET_1$ se ferme. Les tensions $U_4$ et $U_1$ s'annulent et l'interrupteur $Q_1$ s'ouvre. Le courant $I_L$ fait par ailleurs conduire la diode de roue libre $D_2$. La diode $D_{S4}$ et l'interrupteur $FET_1$ sont conducteurs.

③Le courant $I_L$ s'annule et devient négatif. Le signal B est toujours à 0.
L'enroulement $TR_{S2}$ conduit un courant dans la base du transistor $Q_2$. Il en résulte que l'interrupteur

$Q_2$ se ferme. Les tensions $U_2$ et $U_3$ sont alors positives, et les tensions $U_1$ et $U_4$ sont négatives et bloquent la diode $D_{S4}$.

④Le courant $I_L$ est toujours négatif et le signal B passe à 1. L'interrupteur $FET_1$ se ferme et l'interrupteur $FET_2$ s'ouvre. Les tensions $U_3$ et $U_2$ sont nulles et l'interrupteur $Q_2$ s'ouvre. Le courant $I_L$ fait donc conduire la diode de roue libre $D_1$. Par ailleurs, la diode $D_{S3}$ et le transistor $FET_2$ deviennent conducteurs.

Après la phase ④, le cycle ① à ④ est réitéré.

D'après le fonctionnement qui vient d'être indiqué, on constate que l'interrupteur $Q_1$ se ferme seulement si B est à 1 et si le courant $I_L$ dans la charge est positif, et que l'interrupteur $Q_2$ se ferme seulement si B est à 0 et le courant $I_L$ est négatif. Par l'intermédiaire de ce deuxième montage utilisant un transformateur de courant TR, on réalise donc bien la fonction ET logique du signal de décision et d'un signal représentatif du sens du courant dans la charge. Par ailleurs, la légère avance de phase qui est souhaitable en pratique pour connaître en avance le sens du courant est tout naturellement obtenue par le courant magnétisant dans le transformateur TR.

Le transformateur, décrit précédemment, permet d'obtenir un isolement galvanique entre d'une part, la partie commandée comportant la charge Z et les éléments en série avec elle, les transistors $Q_1,Q_2$, les diodes $D_1,D_2$, et les condensateurs $C_1,C_2$, et d'autre part la partie commande comportant l'oscillateur 10, les interrupteurs $FET_1,FET_2$ et les diodes $D_{S3},D_{S4}$.

Le transformateur, décrit précédemment, permet en outre une auto alimentation de la base des transistors $Q_1,Q_2$, sans apport d'énergie par une alimentation extérieure.

Le procédé de commande tel qu'il vient d'être décrit est bien entendu applicable à toute structure ZVS dérivée de la structure en demi-pont présentée sur la figure 1.

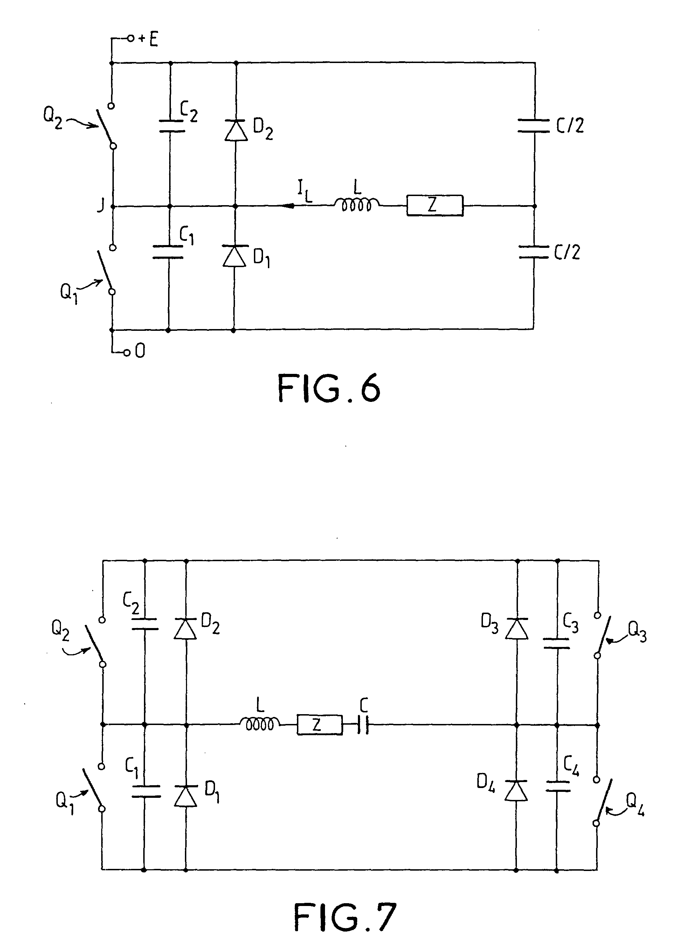

Il est notamment possible de remplacer la source symétrique d'alimentation (-E, O, +E) par une source simple (O, +E), comme le montre la figure 6. Dans ce cas, le condensateur de résonance C de la figure 1 est remplacé par deux condensateurs C/2 montés en diviseur capacitif.

Le procédé de commande est par ailleurs généralisable à une structure ZVS en pont complet, comprenant deux paires de transistors, ou à une structure ZVS comprenant un nombre quelconque de paires de transistors.

La figure 7 illustre le schéma électrique d'une structure ZVS en pont complet :

Sur cette figure, on retrouve la paire d'interrupteurs $Q_1$, $Q_2$ de la structure en demi-pont, associés à leur condensateur d'aide à la commutation et à leur diode de roue libre, respectivement $C_1$, $D_1$ et $C_2$, $D_2$. Par

ailleurs, une seconde paire d'interrupteurs $Q_3$, $Q_4$ associés également chacun à une diode de roue libre $D_3$, $D_4$ et à un condensateur d'aide à la commutation $C_3$, $C_4$, est montée symétriquement par rapport à la charge, de la même manière que la première paire, entre les bornes de l'alimentation en tension continue.

Nous avons vu précédemment les commandes à générer pour les interrupteurs $Q_1$ et $Q_2$ conformément au procédé de commande selon l'invention. La généralisation à la structure en pont complet de la figure 7 consiste à générer la même commande pour deux interrupteurs pris dans chacune des deux paires et situés en diagonale par rapport à la charge. Ainsi, les interrupteurs $Q_1$ et $Q_3$ recevront la même commande. De même, les interrupteurs $Q_2$ et $Q_4$ seront commandés par un même signal.

**Revendications**

1. Dispositif de commande d'un circuit comportant un onduleur à résonance destiné à alimenter au moins une charge comportant une composante inductive (L), l'onduleur étant du type comportant au moins :

   - une paire de transistors de commutation ($Q_1$, $Q_2$) montés en série entre les bornes d'une alimentation en tension continue (-E, +E ; O, E), de manière à former deux interrupteurs conduisant alternativement sous l'action du dispositif de commande;
   - deux diodes de roue libre ($D_1$, $D_2$) montées chacune en parallèle sur l'un des deux transistors;
   - deux condensateurs d'aide à la commutation ($C_1$, $C_2$) montés chacun en parallèle sur l'un des deux transistors;

   le point de jonction commun entre les deux transistors de commutation, les diodes de roue libre et les condensateurs étant reliés en série à une borne de ladite charge; le dispositif comportant :

   - des premiers moyens délivrant pour chaque interrupteur ($Q_1$, $Q_2$), un signal de décision de commutation (B, $\bar{B}$) à deux états représentatifs d'une décision d'ouverture ou de fermeture de l'interrupteur, les deux signaux de décision de commutation étant associés chacun, au moyen d'un interface de puissance, aux deux interrupteurs, les deux signaux de décision de commutation étant en opposition de phase de manière à décider l'ouverture et la fermeture périodiques de chaque interrupteur en alternance;
   - des seconds moyens permettant de détecter les changements de sens du courant ($I_L$) dans la charge;

   dispositif caractérisé en ce qu'il comporte un transformateur de courant (TR) comportant

   - un enroulement primaire ($TR_P$) connecté en série entre la charge et le point de jonction commun entre les interrupteurs ($Q_1$, $Q_2$), les diodes de roue libre ($D_1$, $D_2$) et les condensateurs d'aide à la commutation ($C_1$, $C_2$);
   - un premier enroulement secondaire ($TR_{S1}$) connecté entre l'émetteur d'un ($Q_1$) des deux interrupteurs et la première borne d'une première alimentation en tension continue ($E_1$), la deuxième borne de l'alimentation étant connectée à la base de l'interrupteur ($Q_1$);
   - un deuxième enroulement secondaire ($TR_{S2}$) connecté entre l'émetteur de l'autre ($Q_2$) interrupteur et la première borne d'une deuxième alimentation en tension continue ($E_2$), la deuxième borne de l'alimentation étant connectée à la base de cette autre interrupteur ($Q_2$);
   - un troisième ($TR_{S3}$) et un quatrième ($TR_{S4}$) enroulements secondaires couplés respectivement aux deuxième et premier enroulements secondaires, chacun des troisième et quatrième enroulements secondaires ($TR_{S3}$, $TR_{S4}$) étant relié entre une masse et un des interfaces de puissance;

   les polarisations des différents enroulements étant choisies de manière à ce que l'ouverture d'un interrupteur s'effectue dès que le signal de décision de commutation associé est à un état représentatif de la décision d'ouverture et de manière à ce que la fermeture d'un interrupteur s'effectue lorsque le signal de décision de commutation associé est à un état représentatif de la décision de fermeture et sensiblement lorsque le courant dans la charge a changé de sens.

2. Dispositif selon la revendication 1 caractérisé en ce que la fermeture d'un interrupteur s'effectue, lorsque le signal de décision de commutation associé est à un état représentatif de la décision de fermeture, en légère avance de phase par rapport au moment où le courant dans la charge change de sens.

3. Dispositif selon l'une des revendications précédentes caractérisé en ce que l'interface de puissance comporte un commutateur électronique ($FET_2$, $FET_1$) et une diode ($D_{S3}$, $D_{S4}$), chaque commutateur électronique étant commandé par l'un des deux signaux de décision de commutation (B, $\bar{B}$).

4. Dispositif selon l'une des revendications précédentes caractérisé en ce que les premiers moyens comportent un oscillateur.

**Patentansprüche**

1. Vorrichtung zum Steuern einer Schaltung, die einen Resonanz-Wechselrichter enthält, der wenigstens eine Last versorgen soll, die eine induktive Komponente (L) enthält, wobei der Wechselrichter von dem Typ ist, der wenigstens umfaßt:

   - ein Paar Schalttransistoren ($Q_1$, $Q_2$), die zwischen die Anschlüsse einer Gleichspannungsversorgung (-E, +E; O, E) in der Weise in Serie geschaltet sind, daß zwei Ein/Aus-Schalter gebildet werden, die unter der Wirkung der Steuervorrichtung abwechselnd leiten;
   - zwei Freilaufdioden ($D_1$, $D_2$), die jeweils zu einem der zwei Transistoren parallelgeschaltet sind;
   - zwei Schalthilfskondensatoren ($C_1$, $C_2$), die jeweils zu einem der zwei Transistoren parallelgeschaltet sind;

   wobei der gemeinsame Verbindungspunkt zwischen den beiden Schalttransistoren, die Freilaufdioden und die Kondensatoren mit einem Anschluß der Last in Serie geschaltet sind; wobei die Vorrichtung umfaßt:

   - erste Mittel, die für jeden Ein/Aus-Schalter ($Q_1$, $Q_2$) ein Schalt-Entscheidungssignal (B, $\bar{B}$) mit zwei Zuständen, die eine Entscheidung zum Öffnen oder zum Schließen des Ein/Aus-Schalters repräsentieren, liefern, wobei die beiden Schalt-Entscheidungssignale jeweils über eine Leistungsschnittstelle den beiden Ein/Aus-Schaltern zugeordnet sind, wobei die beiden Schalt-Entscheidungssignale entgegengesetzte Phase besitzen, so daß abwechselnd das periodische Öffnen und Schließen jedes Ein/Aus-Schalters bestimmt wird;
   - zweite Mittel, die ermöglichen, Änderungen der Stromrichtung ($I_L$) in der Last zu erfassen;

   wobei die Vorrichtung dadurch gekennzeichnet ist, daß sie einen Stromtransformator (TR) aufweist, der umfaßt:

   - eine Primärwicklung ($TR_P$), die zwischen die Last und den gemeinsamen Verbindungspunkt zwischen den Ein/Aus-Schaltern ($Q_1$, $Q_2$), die Freilaufdioden ($D_1$, $D_2$) und die SchaltHilfskondensatoren ($C_1$, $C_2$) in Serie geschaltet ist;
   - eine erste Sekundärwicklung ($TR_{S1}$), die zwischen den Emitter eines ($Q_1$) der zwei Ein/Aus-Schalter und den ersten Anschluß einer ersten Gleichspannungsversorgung ($E_1$) geschaltet ist, wobei der zweite Versorgungsanschluß mit der Basis des Ein/Aus-Schalters ($Q_1$) verbunden ist;

   - eine zweite Sekundärwicklung ($TR_{S2}$), die zwischen den Emitter des anderen ($Q_2$) Ein/Aus-Schalters und den ersten Anschluß einer zweiten Gleichspannungsversorgung ($E_2$) geschaltet ist, wobei der zweite Versorgungsanschluß mit der Basis dieses anderen Ein/Aus-Schalters ($Q_2$) verbunden ist;
   - eine dritte ($TR_{S3}$) und eine vierte ($TR_{S4}$) Sekundärwicklung, die mit der zweiten bzw. der ersten Sekundärwicklung verbunden sind, wobei die dritten und vierten Sekundärwicklungen ($TR_{S3}$, $TR_{S4}$) zwischen Masse und eine der Leistungsschnittstellen geschaltet sind;

   wobei die Vorspannungen der verschiedenen Wicklungen in der Weise gewählt sind, daß das Öffnen eines Ein/Aus-Schalters erfolgt, sobald das zugeordnete Schalt-Entscheidungssignal in einem Zustand ist, der die Entscheidung zum Öffnen repräsentiert, und in der Weise, daß das Schließen eines Ein/Aus-Schalters erfolgt, wenn das zugeordnete Schalt-Entscheidungssignal in einem Zustand ist, der die Entscheidung zum Schließen repräsentiert, und im wesentlichen dann, wenn der Strom in der Last seine Richtung geändert hat.

2. Vorrichtung nach Anspruch 1, dadurch gekennzeichnet, daß das Schließen eines Ein/Aus-Schalters dann, wenn das zugeordnete Schalt-Entscheidungssignal in einem Zustand ist, der die Entscheidung zum Schließen repräsentiert, mit einer geringen Phasenvoreilung in bezug auf den Zeitpunkt erfolgt, zu dem der Strom in der Last seine Richtung ändert.

3. Vorrichtung nach einem der vorhergehenden Ansprüche, dadurch gekennzeichnet, daß die Leistungsschnittstelle einen elektronischen Schalter ($FET_2$, $FET_1$) sowie eine Diode ($D_{S3}$, $D_{S4}$) enthält, wobei jeder elektronische Schalter durch eines der beiden Schalt-Entscheidungssignale (B, $\bar{B}$) gesteuert wird.

4. Vorrichtung nach einem der vorhergehenden Ansprüche, dadurch gekennzeichnet, daß die ersten Mittel einen Oszillator enthalten.

**Claims**

1. Device for the control of a circuit comprising a resonance inverter power supply for at least one load comprising an inductive component (L), the inverter power supply being of the type comprising at least:

   - one pair of switching transistors ($Q_1$, $Q_2$) series-connected between the terminals of a DC voltage supply (-E, +E; O, E) so as to form two switches that are alternately conductive under the effect of the control device,

- two freewheeling diodes ($D_1$, $D_2$) each parallel-connected to one of the two transistors,
- two switching-assistance capacitors ($C_1$, $C_2$) each parallel-connected to one of the two transistors, the common junction point between the two switching transistors, the freewheeling diodes and the capacitors being series-connected to a terminal of said load, the device comprising:

  - first means delivering, for each switch ($Q_1$, $Q_2$), a two-state switching decision signal ($B$, $\bar{B}$) representing a decision to open or to close the switch, the two switching decision signals being each associated, by means of a power interface, with the two switches, the two switching decision signals being in phase opposition in such a way as to decide the periodic opening and closing of each switch alternately,
  - second means used for the detection of the changes of direction of the current ($I_L$) in the load, device characterized in that it comprises a current transformer (TR) comprising:

    - a primary winding ($TR_P$) series-connected between the load and the common junction point between the switches ($Q_1$, $Q_2$), the freewheeling diodes ($D_1$, $D_2$) and the switching-assistance capacitors ($C_1$, $C_2$);
    - a first secondary winding ($TR_{S1}$) connected between the emitter of one ($Q_1$) of the two switches and the first terminal of a first DC voltage supply ($E_1$), the second terminal of the supply being connected to the base of the switch ($Q_1$);
    - a second secondary winding ($TR_{S2}$) connected between the emitter of the other ($Q_2$) switch and the first terminal of a second DC voltage supply ($E_2$), the second terminal of the supply being connected to the base of this other switch ($Q_2$);
    - a third ($TR_{S3}$) and a fourth ($TR_{S4}$) secondary winding coupled respectively to the second and first secondary windings, the third and fourth secondary windings ($TR_{S3}$, $TR_{S4}$) being each connected between a ground and one of the power interfaces;

the biases of the different windings being chosen in such a way that the opening of a switch takes place as soon as the associated switching decision signal is in a state representing the decision to open, and in such a way that the closing of a switch takes place when the associated switching decision signal is in a state representing the decision to close, and substantially when the current in the load has changed direction.

2. Device according to Claim 1, characterized in that the closing of a switch takes place, when the associated switching decision signal is in a state representing the decision to close, in a slight phase advance with respect to the time when the current in the load changes direction.

3. Device according to one of the preceding claims, characterized in that the power interface comprises an electronic switch ($FET_2$, $FET_1$) and a diode ($D_{S3}$, $D_{S4}$), each electronic switch being activated by one of the two switching decision signals ($B$, $\bar{B}$).

4. Device according to one of the preceding claims, characterized in that the first means comprise an oscillator.

FIG.1

FIG.2

FIG.4

FIG.3

FIG.5

FIG.6

FIG.7